# EUROPEAN PATENT APPLICATION

(11) **EP 4 411 614 A1**
(43) Date of publication of application: **07.08.2024**
(21) Application number: 23154631.8
(22) Date of filing: 02.02.2023
(51) Int. Cl.: G06Q 20/02, G06Q 40/02

(54) **CLEARANCE AND SETTLEMENT OF TRANSACTIONS**

(71) Applicant: IPCO 2012 Limited, London EC4R 3AB (GB)
(72) Inventor: BARNES, Richard Peter, Chesham, HP5 2EG (GB)
(74) Representative: Keltie LLP

(57) **Abstract**

A computer-implemented system operative to function as an automated clearing house (20) for transactions is described. The system comprises communication means (46) for sending and receipt of transaction-related information to a plurality of financial entities. It also comprises one or more payment systems (41) comprising defined transaction flows, messaging and orchestration of interactions between the automated clearing house and other financial entities. It also comprises one or more settlement systems (42) comprising a defined settlement method. Using the automated clearing house (20), a transaction is cleared and settled through the action of one of the payment systems (41) and an associated settlement system (42). A method of establishing a computer-implemented automated clearing house is also described.

## Description

### TECHNICAL FIELD

The present disclosure relates to clearance and settlement of transactions.

### BACKGROUND

Transactions may be established between parties in a number of ways - credit and debit card payments, account to account transactions - but to complete the transaction process, the transaction needs to be cleared between the participating banks representing both parties (for example, the issuing bank for a consumer account and the acquirer bank for a merchant account) and settled so that funds pass to the correct places to complete the transaction. Clearance comprises the processes necessary to allow settlement to occur, and settlement comprises the actual exchange of funds so that these reflect the completion of the transaction.

With the adoption of credit and debit card payments, transactions have been made between parties at real time, while clearance and settlement had originally been performed significantly more slowly. The development of automated clearing house systems - starting with the Automatic Clearinghouse System in California and BACS in the UK in the 1960s - has allowed clearance and settlement processes to take place more rapidly, eventually reaching real-time. Automated clearing houses are computer-implemented systems adapted to process large volumes of transactions in batches, typically operating on a net settlement basis to reduce the number of deposits that banks need to make. More recent systems such as the Faster Payments Service in the UK is designed to reduce the time to complete payments from three working days to a few seconds.

Consequently, real-time payments systems can be realised if the relationship between a group of banks is relatively simple, but complexity leads to multiple difficulties. There is increasing pressure on automated clearing house systems to support a variety of interactions with different rules, or a broader range of services from which alternatives can be selected. This creates a challenge in itself, but also creates a further challenge for use of assets by participating banks - in order to support multiple offerings, funds may need to be set against each of these offerings to ensure the liquidity of each of them.

The present disclosure has been devised to mitigate or overcome at least some of the above-mentioned problems.

### SUMMARY OF THE DISCLOSURE

According to a first aspect of the present disclosure there is provided a computer-implemented system operative to function as an automated clearing house for transactions, the system comprising: communication means for sending and receipt of transaction-related information to a plurality of financial entities; one or more payment systems comprising defined transaction flows, messaging and orchestration of interactions between the automated clearing house and other financial entities; and one or more settlement systems comprising a defined settlement method; wherein a transaction is cleared and settled through the action of one of the payment systems and an associated settlement system.

By splitting the functionality of the automated clearing house in this way between payment systems and settlement systems, complexities of existing automated clearing house systems can be addressed very effectively. Issues relating to liquidity can be addressed through settlement system design, and as can be seen below, support approaches which allow effective use of participating bank assets even in complex systems. Separation of payment systems from settlement allows for transaction flows to be built within the payment systems, and supports a modular approach which allows for such transaction flows to be built effectively without writing new software code each time.

One or more of the settlement systems may have multiple payment systems associated with it. These multiple payment systems may each be associated with different service levels, or may each be associated with different geographies.

In embodiments, each of the transaction flows is modular, each module comprising a routine predefined for the automated clearing house, wherein the modules are connected to form a transaction flow by linking logic. This allows transaction flows to be constructed in a straightforward fashion, and may enable certain changes to be made by upgrading individual modules to upgrade multiple transaction flows.

Each payment system and each settlement system may in embodiments associated with a specified currency.

In embodiments, each settlement system may be adapted to be associated with funds associated with financial entities interacting with the automated clearing house to act as a liquidity pool to support transactions involving those financial entities. Using this approach, the need to set funds against each of a large number of automated clearing house service offerings is removed.

In a second aspect, there is provided a method of establishing a computer-implemented automated clearing house, comprising: establishing a library of automated clearing house modules, each module defining an automated clearing house function; defining one or more payment systems for the automated clearing house, wherein each payment system comprises one or more workflows constructed from modules from the library of automated clearing house modules and linking logic; defining one or more settlement systems for the automated clearing house wherein each settlement system defines a settlement method for the automated clearing house; and establishing an automated clearing house scheme for the automated clearing house from the one or more payment systems and the one or more settlement systems, wherein automated clearance house functionality is provided by the combination of one payment scheme and one settlement scheme.

In this way, an automated clearance house offering can be constructed or modified in a straightforward manner without requiring rewriting of fundamental code every time. Individual modules may require the rewriting of code, but these will then be used in multiple clearing house offerings.

### BRIEF DESCRIPTION OF THE DRAWINGS

One or more embodiments of the disclosure will now be described, by way of example only, with reference to the accompanying drawings, in which:
Figure 1 shows a transaction ecosystem including a payment system and an automated clearing house system along with other parties acting and interacting in the transaction system;
Figure 2 illustrates schematically the setup of a conventional automated clearing house;
Figure 3 illustrates schematically modern requirements for the setup of an automated clearing house;
Figure 4 illustrates an automated clearing house scheme structure according to an embodiment of the disclosure;
Figures 5A to 5D illustrate implementation of different scenarios using the automated clearing house scheme structure of Figure 4;
Figures 6A to 6C illustrate credit transfer process according to three alternate definitions;
Figure 7 illustrates automated clearing house capabilities in modular form according to an embodiment of the disclosure; and
Figure 8 illustrates schematically a credit transfer workflow for an automated clearing house according to an embodiment of the disclosure in which multiple definitions of a credit transfer process can be employed.

### DETAILED DESCRIPTION

General and specific embodiments of the disclosure will be described below with reference to the Figures.

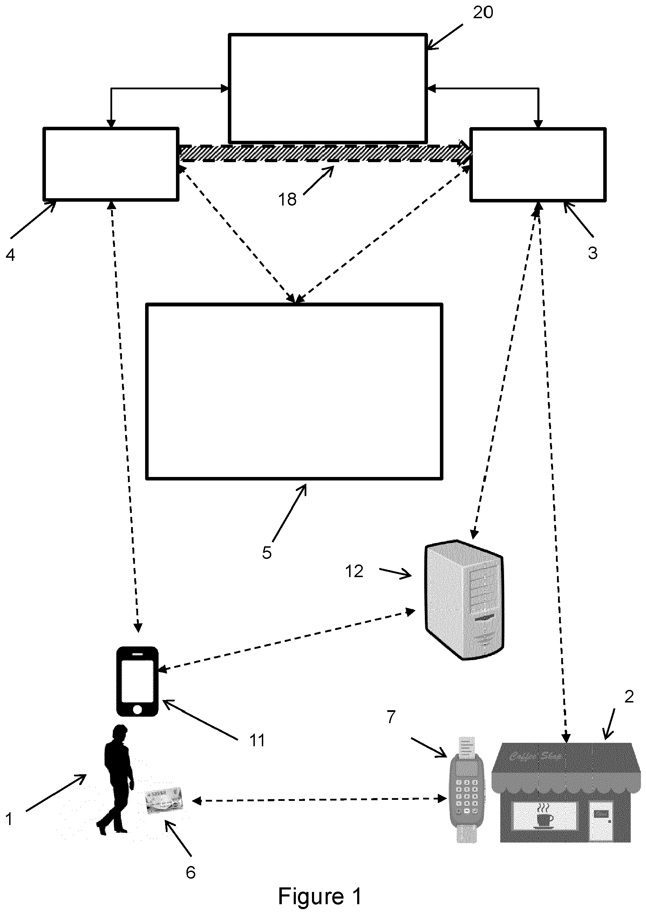

Figure 1 shows a transaction ecosystem including a payment system and an automated clearing house system along with other parties acting and interacting in the transaction system.

Transactions between a consumer 1 and a merchant 2 (chosen here simply as examples of transacting parties) may be carried out in a number of ways. The consumer 1 may most typically be using a banking app on their mobile phone 11 to make a payment to another individual, or to a business or organisation. Alternatively, the consumer 1 may be cardholder of a payment card 6 such as a debit card which can transact with a point-of-sale terminal 7 of the merchant 2. The transaction is communicated to the acquiring bank 3 which holds the merchant account, and then via the payment network 5 associated with the payment card 6 to the cardholder's issuer bank 4 for authorisation of the transaction. Alternatively, the consumer 1 may use their mobile phone 11 or other computing device to communicate with a computer system 12 acting for the merchant 2 (for example, a payment service provider providing payment services to merchants) - in this case, an account-to-account transaction may be made between the transacting parties via their computing devices.

These (and other) approaches result in an authorised transaction between (here) a consumer 1 having an account with issuer bank 4 and a merchant 2 having an account with acquirer bank 3. At the end of the transaction process, funds need to have passed from the issuer bank 4 to the acquirer bank 3 in accordance with the transaction - settlement is the process of moving the funds to the correct place, and clearance involves any steps necessary to move from authorisation of the transaction to actual flow of funds. In this case, the clearance process is managed by automated clearing house 20 which manages this process for these (and probably a great many other) banks, and which enables a consequent flow 18 of funds from the issuer bank 4 to the acquirer bank 3 to reflect the transaction.

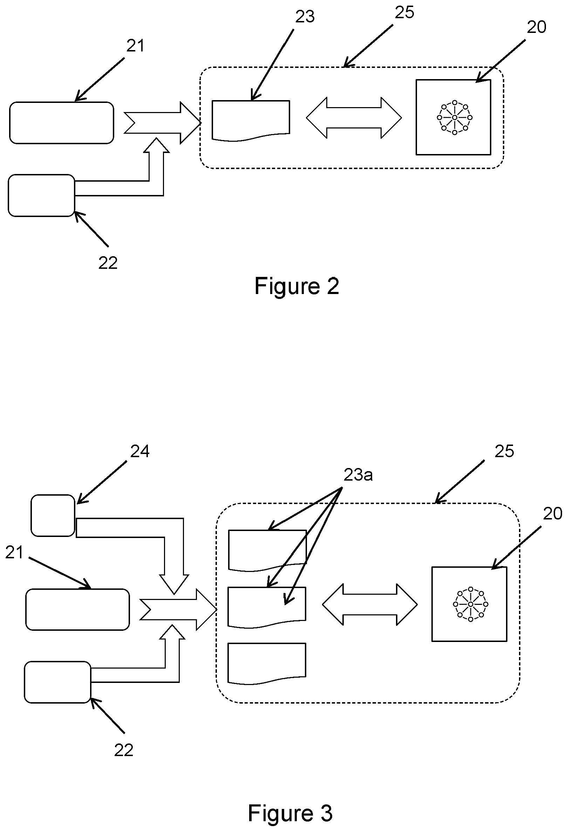

Figures 2 and 3 illustrate how the demands on automated clearing house systems have changed over time. Figure 2 illustrates the conventional arrangement, in which the automated clearing house 20 is established by a scheme operator 21 acting to support an entity such as a central bank 22, typically in order to implement a national clearing house scheme, usually as a critical part of a domestic banking infrastructure. Such an automated clearing house is typically established with a focus on essential bank-to-bank immediate transactions in domestic currency. Here the central bank 22 defines a settlement model and other required banking practices, and these are developed by the scheme operator into a payments rulebook 23 for the automated clearing house 20 - these are considered here as the elements of the automated clearing house scheme 25. There is one rulebook and one settlement model per country (or at any rate, per deployment - there may be multiple automated clearing houses in a country and these may have different rulebooks).

Figure 3 illustrates modern requirements. In this case, the automated clearing house 20 supports not only a central bank 22, but also at least one more party (in this case, regional settlement agency 24). Each party now has their own settlement model and required banking practices, and the scheme provider 21 now needs to implement each of these - it does this by providing multiple service rulebooks 23a instead of a single payments rulebook, with each service rulebook 23a representing in this case the requirements of a separate party.

The arrangement shown in Figure 3 is obviously more complex than that of Figure 2, and further development is towards more flexibility and complexity, rather than less, to support new payment models. For example, service rulebooks 23a may not all represent separate customers - different rulebooks may be used for different products offered by the same party, for example at different prices and with different levels of service. There may also be a wish to support multiple currencies - for example, both a domestic currency and a regional or reserve currency. Payment infrastructures may be trans-national - for example, provided by multinational consortia operating across geographical blocs to unify payments across these blocks.

These developments provide considerable challenges, particularly for provision of a real-time service. Workflows rapidly become more complex, as does the codebase associated with the automated clearing house and such the risk of error and the more regular need for updates and changes. Liquidity to support each automated clearing house activity now becomes a major issue - normally, participants in an automated clearing house system need to commit funds to meeting their obligations under the system. Where there are a significant number of automated clearing houses or automated clearing house services each requiring funds to be set against them, this may become a problematic obligation for the participants.

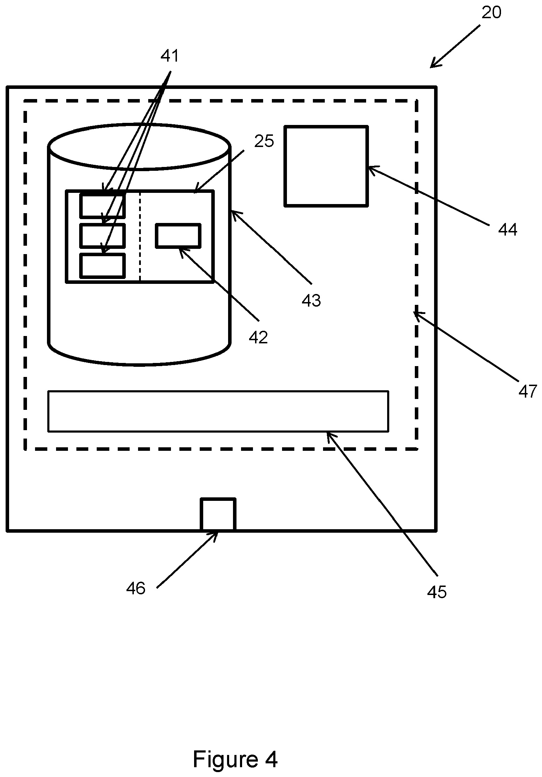

An approach to structuring an automated clearing house system that meets these challenges is illustrated in Figure 4. Figure 4 illustrates computing apparatus configured to act as an automated clearing house 20. This comprises (at least) a processor 44 and a memory 43 together defining a computing environment 47 operating under the control of an operating system 45. The computing apparatus has one or more network connections 46, here so that the automated clearing house 20 can communicate with other computing entities - typically those representing banks and other financial entities - as needed. The memory 43 has stored in it an automated clearing house system scheme 25 for implementation by the automated clearing house 20.

In this approach, the automated clearing house system scheme 25 - more specifically, the service rulebook of the automated clearing house system - comprises two types of sub-system: a payment system 41 and a settlement system 42. The automated clearing house 20 comprises a plurality of payment systems 41 and may have only a single settlement system 42 (though some embodiments may also have a plurality of settlement systems 42). The diversity between different parties (or services) and their different settlement models and banking practices is handled by the payment system 41. This allows a common settlement flow to be used across transactions using different payment systems by the settlement system 42 - which also allows liquidity to be associated with the settlement system 42, so that all the payment systems 41 are sharing liquidity.

Payment systems 41 are defined by a number of specific features. They will each be associated with a specific currency. A payment system will be represented by a set of workflows, with each transaction type supported by the payment system having a defined workflow associated with it. Each transaction type will have its own set of processing and validation rules. Message formats, timeouts and service level agreements may all be established through the payment system 41. In general terms, the payment system manages transaction flow, orchestration, and message switching. As will be described further below, further efficiencies can be made by using a modular approach to construct transaction flows.

Settlement systems 42 are also defined by particular features. Again, these will each be associated with a separate currency. However, the settlement system 42 will be associated with a set of accounts such that there is one set of accounts (and hence one liquidity pot) per participant for the settlement system 42. The settlement system manages the money flow side of transactions - it determines how liquidity is tracked and moved in real time, and how settlement is performed (for example, in real time or as deferred net settlement).

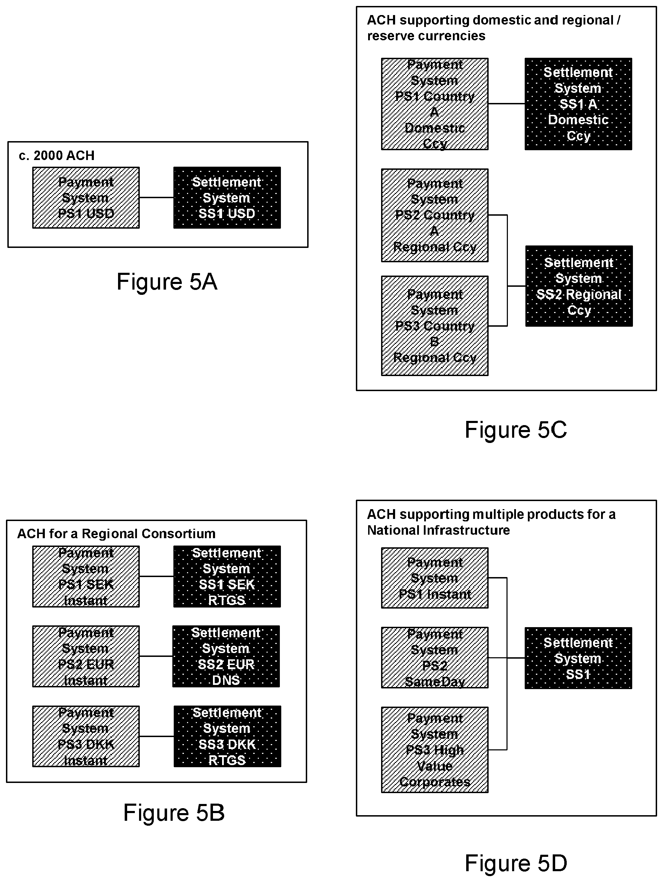

Figures 5A to 5D illustrate how a wide range of different scenarios can be modelled using combinations of appropriately defined payment systems 41 and settlement systems 42. Figure 5A illustrates the traditional automated clearing house scheme - a single payment system operating to a first defined set of rules (PS1) and transacting in US dollars, with a corresponding settlement system (SS1) also operating in dollars. Figure 5B illustrates a more complex scenario - an automated clearing house for a regional consortium operating across multiple countries and currencies. Here, there are three payment systems defined (PS1, PS2 and PS3), each defining an instant settlement scheme but in a different currency (SEK, EUR and DKK respectively). Each of these three payment systems has a corresponding settlement system (SS1, SS2 and SS3), each in the corresponding currency, though here it can be seen that different settlement systems are used - for SS1 and SS3 dealing with the two national currencies, real-time gross settlement is used, whereas for SS2 dealing with the regional currency, deferred net settlement is used.

Figures 5C and 5D illustrate cases in which one settlement system is used with more than one payment system. In Figure 5C, a scenario is shown where the automated clearing house scheme supports both a domestic currency and a regional or reserve currency for a country - in this case, both currencies are supported for country A, whereas only a regional currency is supported for country B. Three payment systems are established: PS1 for country A using domestic currency; PS2 for country A using the regional/reserve currency; and PS3 for country B using the regional/reserve currency. PS1 has a dedicated settlement system, SS1, as before, handling transactions in the country A domestic currency. However in this case both the regional/reserve currency payment systems PS2 and PS3 share the same settlement system SS2, operating in the regional/reserve currency. Figure 5D illustrates a different scenario - here there is only one automated clearing house in a national infrastructure (as for Figure 5A), but there are multiple service levels defined, each one being represented by a different payment system: an instant system PS1; a lower priority same day system PS2; and a dedicated system for high value corporates PS3. All three systems are able to use the same settlement system SS1, as all the differentiation required by the different service levels can be handled in the payment systems, allowing the settlement system to be the same for each - which has the powerful advantage that the same liquidity pool can be used for all levels of service.

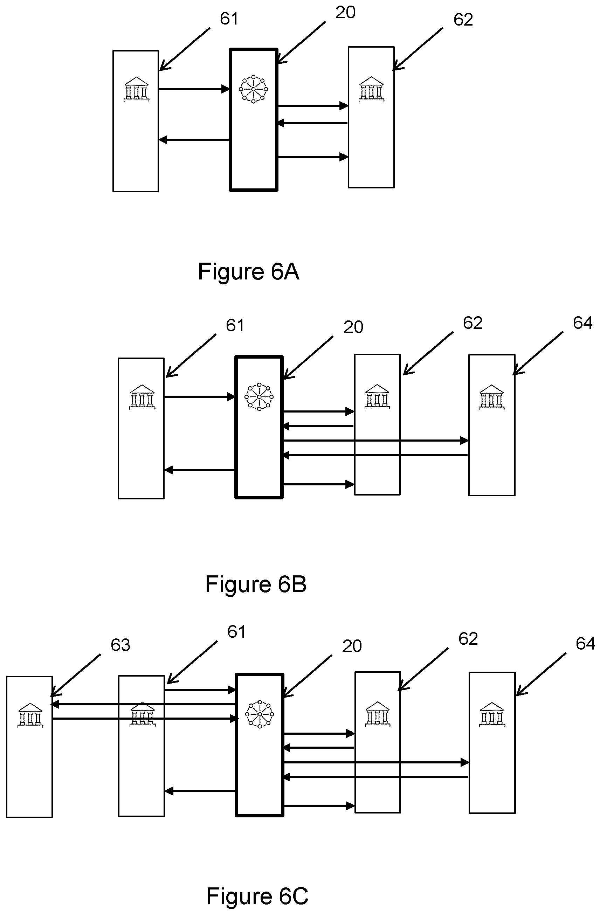

Part of the role of the payment system is to define process orchestration. Payment processes can typically be defined in a number of different ways - part of the role of the payment system is to define workflows for specific payment processes, with these workflows then being implemented by the automated clearing house. This can involve the same physical deployment of an automated clearing house implementing the same process realised in different ways. Figures 6A to 6C illustrate three different definitions of Credit Transfer as a process - here, these are three different models implemented in separate payment systems but implemented by the same automated clearing house. In Figure 6A, Credit Transfer operates by a first party 61 (debtor) contacting the automated clearing house 20 to initiate the credit transfer, the automated clearing house 20 checking with the second party 62 (creditor) to establish that the transfer can take place, and the automated clearing house 20 then establishing the credit transfer between the first and second parties. Figure 6B shows a similar process, but in this case an additional party 64 is needed to establish the transfer or guarantee the second party, which introduces an additional pair of interactions. For Figure 6C, an additional party 63 is similarly needed to establish the transfer for, or to guarantee, the first party 61, resulting in two additional steps before the automated clearing house 20 even contacts the second party 62.

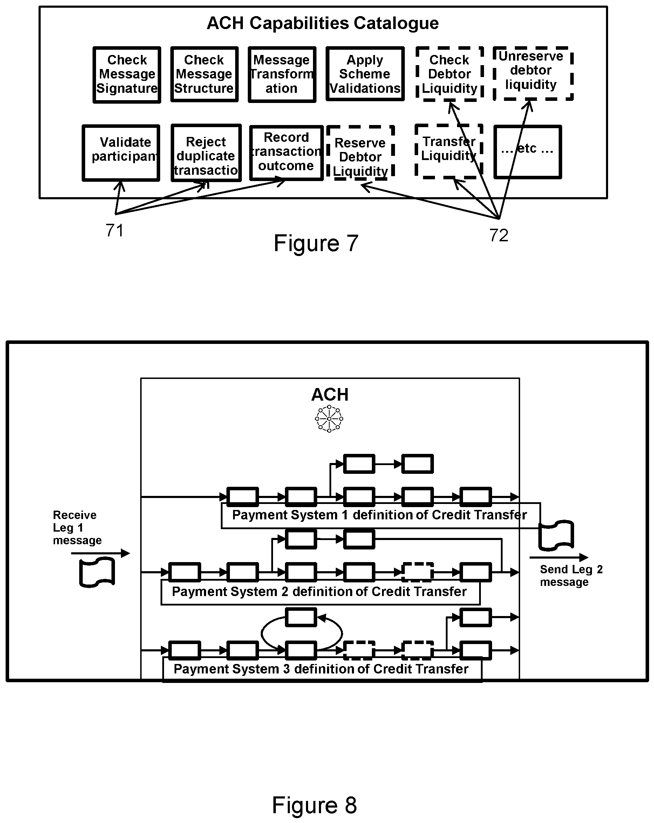

These processes can be developed in a modular form for implementation in the payment system - these then define the operation of the automated clearing house as a switch. These can be established by defining a catalogue of automated clearing house capabilities, as shown in Figure 7 - these capabilities can all be defined as discrete routines, and then combined together with process logic in order to construct an orchestrated process. As noted in Figure 7, there are two types of automated clearing house process defined: payment processes 71 and settlement processes 72 - as can be seen here, settlement processes largely relate to management of liquidity. Figure 8 illustrates schematically how an automated clearing house workflow can be built from such routines - the scenarios of Figures 6A to 6C for credit transfer are modelled here as parallel processes to be followed according to which conditions apply, with each of the workflows available as a valid route and with each of the workflows consisting of routines from the capabilities catalogue linked together by appropriate logic.

Many modifications may be made to the above examples without departing from the scope of the present disclosure as defined in the accompanying claims.

## Claims

1. A computer-implemented system operative to function as an automated clearing house (20) for transactions, the system comprising:
communication means (46) for sending and receipt of transaction-related information to a plurality of financial entities;
one or more payment systems (41) comprising defined transaction flows, messaging and orchestration of interactions between the automated clearing house and other financial entities; and
one or more settlement systems (42) comprising a defined settlement method;
wherein a transaction is cleared and settled through the action of one of the payment systems and an associated settlement system.

2. The system of claim 1, wherein one or more of the settlement systems (42) has multiple payment systems (41) associated with it.

3. The system of claim 2, wherein the multiple payment systems (41) are each associated with different service levels.

4. The system of claim 2, wherein the multiple payment systems (41) are each associated with different geographies.

5. The system of any preceding claim, wherein each of the transaction flows is modular, each module comprising a routine predefined for the automated clearing house (20), wherein the modules are connected to form a transaction flow by linking logic.

6. The system of any preceding claim, wherein each payment system (41) and each settlement system (42) is associated with a specified currency.

7. The system of any preceding claim, wherein each settlement system (42) is adapted to be associated with funds associated with financial entities interacting with the automated clearing house (20) to act as a liquidity pool to support transactions involving those financial entities.

8. A method of establishing a computer-implemented automated clearing house (20), comprising:
establishing a library of automated clearing house modules, each module defining an automated clearing house function;
defining one or more payment systems (41) for the automated clearing house (20), wherein each payment system (41) comprises one or more workflows constructed from modules from the library of automated clearing house modules and linking logic; and
defining one or more settlement systems (42) for the automated clearing house (20) wherein each settlement system (42) defines a settlement method for the automated clearing house; and
establishing an automated clearing house scheme for the automated clearing house (20) from the one or more payment systems and the one or more settlement systems, wherein automated clearance house functionality is provided by the combination of one payment scheme (41) and one settlement scheme (42).
